# EUROPEAN PATENT APPLICATION

(11) **EP 2 182 264 A1**
(43) Date of publication of application: **05.05.2010**
(21) Application number: 08167909.4
(22) Date of filing: 30.10.2008
(51) Int. Cl.: F16L 27/107, F16L 47/18

(54) **Flexible coupling device for fluid connection**

(71) Applicant: KAMSTRUP A/S, 8660 Skanderborg (DK)
(72) Inventor: Laursen, Peter Schmidt, 8660, Skanderborg (DK)
(74) Representative: Plougmann & Vingtoft A/S

(57) **Abstract**

A flexible coupling device for providing a flexible or elastic fluid transport between two pipes. The device includes a monolithic structure with an opening arranged for fluid transport. The monolithic structure is formed by a first part for connection to a first orifice of a pipe, a second part for connection to a second orifice of another pipe, and an intermediate part formed so as to provide a flexible interconnection between the first and second parts. The first and second parts are preferably threaded and may have a nut shape in order to allow engagement with a tool for mounting. A sealing material is arranged to seal an inner part of the monolithic structure from contact with the fluid upon fluid transport through the opening in the monolithic structure. The monolithic structure and the sealing material are formed by different polymeric materials, preferably with the sealing material being of a significantly softer polymeric material than the polymeric material used to form the monolithic structure. The intermediate and flexible part may be formed by a helical structure, e.g. including a blocking mechanism arranged to block relative rotation of the first and second parts. The flexible coupling device is suited for flexibly connecting a flow meter with a polymeric housing to piping in order to protect the polymeric housing from damage due to lateral or bending forces.

## Description

### Field of the invention

The invention relates to the field of coupling devices and fittings for providing a flexible fluid connection, e.g. for connecting a flow meter part of a consumption meter, such as a heat or water meter, to a water pipe installation. More specifically, the invention provides a flexible coupling device made of two different polymeric materials and a method of manufacturing such device.

### Background of the invention

A flow meter for measurement of a fluid flow associated with a consumption meter for charging most often has a housing made of metal, e.g. brass. Such metal housing is strong enough to withstand typical mechanical stress when mounted fixed to a metal piping installation, e.g. a cold water supply or a heat supply pipe installation. Especially, such fixed mounting may apply bending forces or lateral movement on the flow meter housing. Flow meter housings formed of polymeric materials has a number of advantages over metal housings. However, a flow meter housing formed by a polymeric material is rather vulnerable to such bending forces. Thus, such housing should be flexibly mounted to the piping installation to ensure that the housing will not be permanently damaged due to the bending forces or lateral displacement.

EP 1 901 043 A2 by Hydrometer describes a consumption meter housing for inserting in a piping installation. The housing is formed of plastics, and one integrated threaded connecting piece for connecting to a pipe provides a rigid connection to the housing, while a connecting piece in the other end of the housing is mounted flexibly to the housing by means of an elastic connection part made of an elastic material, e.g. Silicone or an elastomeric material. The elastic material is fixed to the plastics housing and to the mounting piece such as by die casting, and a recess on the housing and the mounting piece serves to keep the elastic material in place. The role of the elastic material is to absorb lateral displacement and bending forces in order to protect the plastics housing from damaging forces. However, such elastic material is vulnerable with respect to mechanical damage which may cause a fatal leak that would require replacement of the flow meter. E.g. the elastic material is rather vulnerable to sharp objects and the fixing of the elastic material via recesses is rather vulnerable to pull forces or rotational force which may occur during mounting. Damage of the elastic material will require replacement of the entire flow meter. Furthermore, since the mounting piece is attached to the flow meter housing via the elastic material, it is not possible to adapt the flow meter for insertion into piping systems with different distances between the pipes. Such adaptation will require an additional external extension device, or the need for manufacturing a series of flow meters with mounting pieces of different lengths.

### Summary of the invention

Thus, according to the above explanation, it is an object of the present invention to provide a flexible coupling device which can be used to provide a flexible connection of a flow meter into a piping installation in order to protect the housing from possibly damaging bending forces and lateral displacement. Still, the flexible coupling device must have a structure that does not introduce a significant vulnerable part which may cause leakage. Still, the flexible coupling device must be possible to manufacture as a low cost component in different lengths so as to allow a one size of flow meter housing to be easily fitted into installations with different piping distances.

According to a first aspect, the invention provides a flexible coupling device arranged to provide a flexible fluid transport between two orifices, wherein the coupling device includes
- a monolithic structure having an opening arranged for transport of a fluid, the monolithic structure including
   - a first part arranged for connection to a first orifice,
   - a second part arranged for connection to a second orifice,
   - an intermediate part formed so as to provide a flexible interconnection between the first and second parts, and
- a sealing material arranged to seal an inner part of the monolithic structure from contact with the fluid upon transport through the opening in the monolithic structure,
wherein the monolithic structure is formed by a first polymeric material, and wherein the sealing material is formed by a second polymeric material different from the first polymeric material.

By "flexible" is understood an ability to absorb forces by deformation without permanent damage. The intermediate part is capable of absorbing preferably lateral and bending forces between the first and second parts without the intermediate part being permanently damaged.

Such flexible coupling device can be designed with a flexibility such that it absorbs lateral and bending forces, e.g. for inserting a flow meter with a polymeric housing into a piping system. By appropriate choice of the first and second polymeric materials the monolithic structure can be formed of a rather hard polymeric material compared with the sealing material which is preferably made of a considerably softer polymeric material than the monolithic structure. Since the monolithic structure has a flexible intermediate part, the monolithic structure can be formed to provide a flexibility to absorb forces, and at the same time it can be formed strong enough to limit possibly damaging forces that could cause a leakage.

Further, since it is formed by two different polymeric materials it is possible to manufacture the coupling in a two-component casting process in which the monolithic structure is first cast using one mould, and wherein the monolithic structure is then put into another mould for casting the sealing material. This process can take place in one machine, or a robot may be used to take the monolithic structure cast in one machine and bring it into another machine where the sealing material is then cast. This enables a low cost manufacturing without the need for an assembly process. It is even possible to shape the sealing material such that it provides sealing gaskets at both the first and second ends, thus the need for separate sealing gaskets is eliminated. Altogether the coupling device can be manufactured in low cost versions that makes it feasible to produce a set of coupling device of different length and deliver such set of coupling devices together with a flow meter (e.g. heat meter, cooling meter, water meter or gas meter), so as to allow the fixed length flow meter to fit into piping systems with different distances between orifices. Thus, this way of fitting the flow meter to different lengths reduces the need for manufacturing flow meters of different lengths.

Preferably, the first polymeric material is harder than the second polymeric material. Especially, the first polymeric material may exhibit a value between 35-100 on the shore D scale, and the second polymeric material may exhibit a value between 10-90 on the shore A scale. This may be obtained e.g. by selecting one of: fibre reinforced -PPS, -PA12, -PA6, -PPO, -PES or -PEEK as the first polymeric material and selecting one of: Silicone, NR, SBR, IIR, EPDM, templastic -TPE or - TPU as the second polymeric material. Preferably, the first and second polymeric materials are matched in relation to the selected shape and size of the coupling device, so as to provide a coupling device with desired mechanical properties such as strength and elasticity.

One preferred combination of first and second polymeric materials is: a first polymeric material in the form of PPS (Ryton R4-220), with a hardness of 90 Shore D, a tensile strength of 185 MPa, and a module of elasticity of 14000 MPa; and a second polymeric material in the form of TPE (Kraiburg TF 5 WKZ black), with a hardness of 58 Shore A, and a tensile strength of 11 MPa.

Another preferred combination of first and second polymeric materials is: a first polymeric material in the form of PA12 (Grivory HTV-4H1 40% GF), with a hardness of 89 Shore D, a tensile strength of 200 MPa, and a module of elasticity of 14250 MPa; and a second polymeric material in the form of Silicone (Stockwell Elastomerics LSR SE2060), with a hardness of 60 Shore A, and a tensile strength of 9 MPa.

The sealing material is preferably integrated with the first and second parts and the intermediate part using a two-component casting process, as already mentioned.

Preferably, the sealing material is through-going from the first part to the second part, and wherein the sealing material provides a first gasket surface at the first part, and a second gasket surface at the second part. This eliminates the need for separate gaskets, and thus reduces the number of elements in a final product thereby eliminating errors in packaging.

The intermediate part may include an open structure, and wherein the sealing material serves to seal the opening provided by the open structure so as to provide a sealed opening through the intermediate part. By "open" structure is understood a structure which is to be considered as open with respect to leaking of the fluid (e.g. water or gas). Such open structure can be formed so as to provide the desired flexibility in all or at least in some directions, and at the same the open structure can be formed with elements serving to provide at least a certain resistance against possibly damaging forces in some of or in all directions. Especially, the open structure may include one or more helically shaped elements connecting the first and second parts. The open structure of the intermediate part may be embedded in the sealing material. Thus, in such embodiment the sealing material serves to seal the opening through the monolithic part and to further seal the intermediate part from influence from outside.

The intermediate part preferably has a structure arranged to limit relative movements of the first and second parts, hereby providing a protection against permanent damage of the coupling device. Especially, the intermediate part may include a helical structure serving to limit relative movement of the first and second parts in at least one direction. Especially, the intermediate part may be arranged to limit opposite rotation of the first and second parts outside a limited angular interval. More specifically, the intermediate part may include a block mechanism arranged to block opposite rotation of the first and second part, in at least one direction, when exceeding the limited angular interval. Such rotation blocking serves to protect the flexible interconnection between the first and second parts during installation which may include rotation of one of the first and second parts.

At least one of the first and second parts includes a thread arranged for connection to an associated counterpart, such as the first part including an inward threaded part and the second part including an outward threaded part. Such threaded portions are preferably suited to fit threads on the associated piping and/or threads on a flow meter.

The intermediate part may provide its flexibility by having at least a portion of its extension which exhibits a cross sectional area being smaller than a cross sectional areal of any of the first and second parts. In this way the first and second parts are stronger in lateral and bending directions than the intermediate part which will therefore absorb such forces rather than the first and second parts.

To facilitate installation, the first and second parts preferably have parts arranged for engagement with an associated tool for attaching the flexible coupling device to an associated piping, such as bolt shaped surface.

In one embodiment suited for providing a considerable extension, the intermediate part includes a plurality of flexible interconnections connected via at least one non-flexible section, such as a tubular extension. Still such embodiment that can provide a rather large extension, can be formed monolithically, since the flexible interconnection embodiment described above can simply be copied a plurality of times between non-flexible sections. In a preferred embodiment, one tubular extension is connected between first and second flexible interconnections. To easily provide different total lengths, the first and second flexible interconnections can be identical, while only the non-flexible section in between is varied in length.

In a second aspect, the invention provides use of a flexible coupling device according to the first aspect connecting an ultrasonic flow meter, such as an ultrasonic flow meter with a polymeric housing, to a pipe. As described above, the flexible coupling device can be designed such that possibly damaging lateral and bending forces do not damage the ultrasonic flow meter housing. This is especially important in case of a flow meter with a relatively vulnerable polymeric flow meter housing. More specifically, the flow meter may be accompanied with a plurality of flexible coupling devices with different length, so as to allow the flow meter to be mounted in piping installation of different lengths.

In a third aspect, the invention provides a set of flexible coupling devices including a plurality of flexible coupling devices according to the first aspect, wherein the plurality of coupling devices have different total lengths. Such set provides a low cost kit to accompany a flow meter and thereby allow a fixed size flow meter to suit different distances in piping installations. Especially, the plurality of flexible coupling devices may have identical designs differing only with respect to a length of the monolithic structure. More specifically, the different lengths of the monolithic structures may be provided by non-flexible extension portions differing in length.

In a fourth aspect, the invention provides a method of manufacturing a flexible coupling device according to the first aspect, the method including casting the monolithic structure of the first polymeric material in a first mould, and casting the sealing material (SM) of the second polymeric material together with the monolithic structure using a second mould. Such method is fast and easy since it requires a minimum of manual and/or robotic interference before the final coupling device is manufactured. E.g. the final flexible coupling device can be manufactured in one single machine, e.g. in a machine where the second mould is identical with the first mould, expect for a core part. If the core part of the second mould has a smaller diameter than a core part of the first mould, it is possible to manufacture a flexible coupling device in which the sealing material is through going and thus seals an inner part of the monolithic structure.

It is appreciated that any advantage mentioned for the first aspect applies as well for the second, third, and fourth aspects. Further, any sub aspect mentioned in connection with the first aspect may in any way be combined with the second, third, and fourth aspects.

### Brief description of drawings

In the following, the invention will be described in more details by referring to embodiments illustrated in the accompanying drawings, of which
Fig. 1 illustrates a simple cut through sketch of an embodiment,
Fig. 2 illustrates a 3D view of an embodiment with threaded bolt shaped first and second parts,
Fig. 3 illustrates different views of a monolithic structure embodiment with an intermediate part having helically shaped elements with a rotation block part,
Fig. 4 illustrates different view of another monolithic structure embodiment with an intermediate part having helically shaped elements,
Fig. 5 illustrates different views of yet another monolithic structure embodiment with an intermediate part having an open grid shaped structure,
Fig. 6 illustrates different views of an embodiment with both the monolithic structure and the sealing element present,
Fig. 7 illustrates two views of an embodiment where the intermediate part includes an extension part in the form of a non-flexible tubular piece.

### Detailed description of the invention

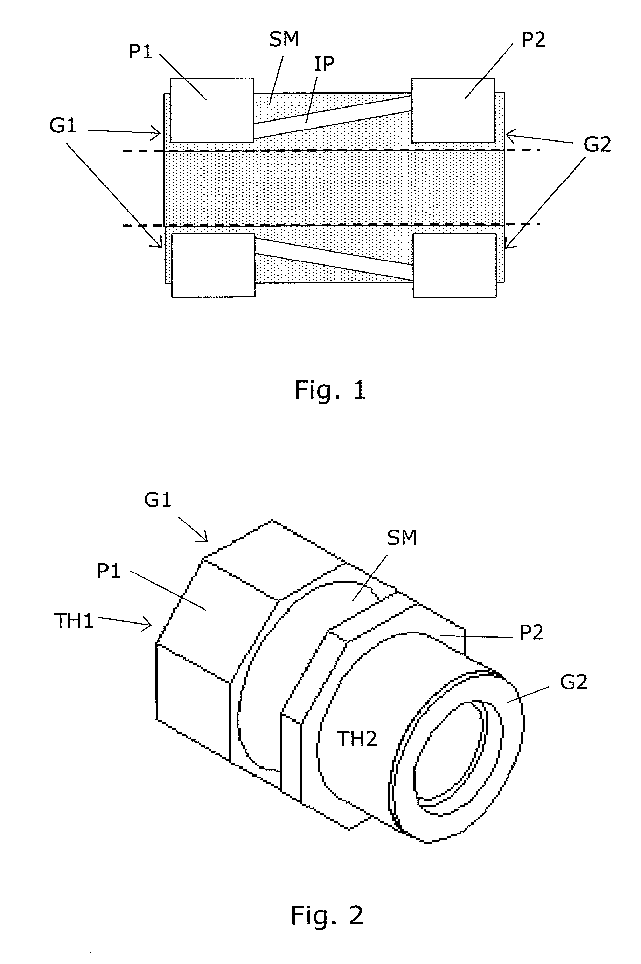

Fig. 1 illustrates a sketch showing a cut-through view of a simple embodiment of the flexible coupling device. A monolithic structure is formed by a first part P1 and a second part P2 interconnected by an intermediate part IP in the form of an elastic structure monolithically formed with the first and second parts P1, P2. The first and second parts P1, P2 provides connection to respective orifices, e.g. by providing a locking mechanism or by means of threads formed on the first and second parts P1, P2.

For simplicity, the illustrated embodiment is rotational symmetric about a horizontal axis through the centre of the through-going opening for fluid transport indicated by the horizontal dashed lines. As seen, a sealing material SM serves to seal inner parts of the monolithic structure from contact with the fluid. The intermediate part IP is seen to be embedded in the sealing material SM. Further, in the ends of the coupling device, the sealing material SM protrudes outside the through-going opening for fluid transport and thus provides gaskets G1, G2 for sealing the connection to the respective orifices, e.g. one for connecting to a pipe, and the other one for connecting to a flow meter housing.

The monolithic structure P1, IP, P2 and the sealing material SM are made from different polymeric materials. Preferably with the sealing material SM is a polymeric material being significantly softer than the polymeric material forming the monolithic structure P1, IP, P2 which is preferably made from a polymeric material allowing handling with metal tools on the first and second parts P1, P2 during installation. In a preferred embodiment the monolithic structure is made of PA12, while the sealing material is silicone rubber.

Fig. 2 illustrates a 3D view of an embodiment where both the first and second parts P1, P2 include nut shaped parts that allows engagement with a tool during installation. The first part P1 is threaded (not visible) on an outer surface of its end part, and the second part P2 is threaded on an inner surface of its end part. Thus, such embodiment allows easy mounting to piping and/or a flow meter with matching threads. The sealing material SM is visible between the first and second parts P1, P2 where it covers an intermediate part embedded in the sealing material SM. Further, the sealing material SM is through-going and it protrudes in one end in front of the second part P2 and thus forms a flat surface serving as an integrated packing or gasket G2. A similar flat surface serving as an integrated packing or gasket G1 is present on an inside (not visible) part of the first part P1.

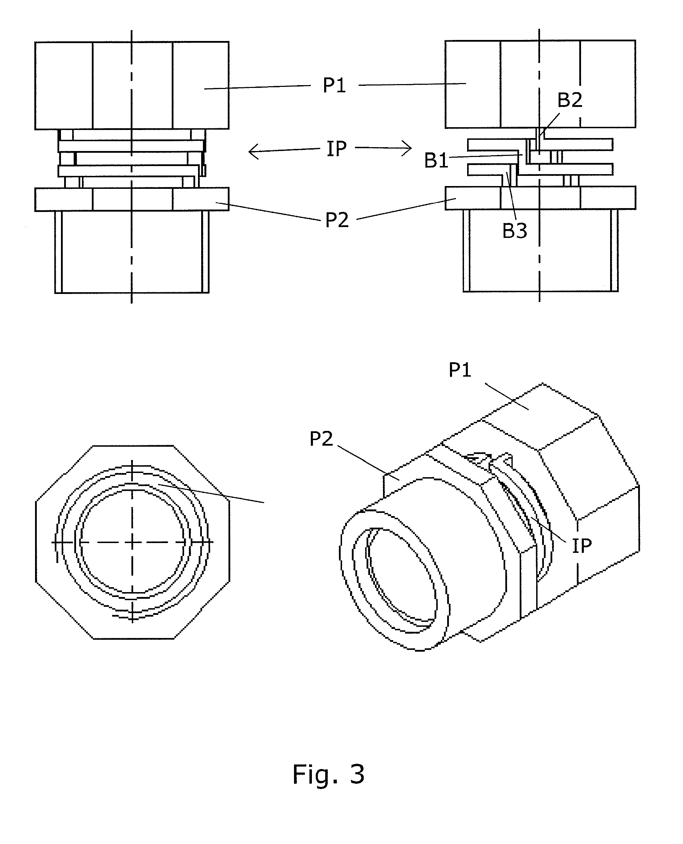

In Fig. 2 the intermediate part interconnecting the first and second parts P1, P2 is not visible. However, different embodiments of the intermediate part will be illustrated in the following Figs. 3-6 which all illustrate monolithic structure embodiments without the sealing material present. All embodiments in Figs. 3-6 have the same first and second parts P1, P2 as illustrated and described in Fig. 2, and thus only a detailed description of the intermediate part IP will be given in the following.

Fig. 3 illustrates different views of a monolithic structure embodiment where the intermediate part IP is an open structure with a generally helically shaped element encircling the through-going opening for fluid transport and connected to the first part P1 in its one end and connected to the second part P2 in its opposite end. This structure thus forms a spring effect allowing a relatively lateral as well as longitudinal movement between the first and second parts P1, P2. As seen on the upper rightmost part of Fig. 3, the intermediate part IP deviates from a pure helical shape since it has a first bend B1 on a middle portion arranged to engage with a second bend B2 on an end portion towards the first part P1 upon relative rotation of the first and second part P1, P2 in one direction. The first bend B1 is arranged to engage with a third bend B3 on an end portion towards the second part P2 upon relative rotation of the first and second parts P1, P2 in the opposite direction. Thus, in this way the intermediate part IP provides a blocking mechanism that serves to limit a free angular interval of relative rotation of the first and second parts P1, P2. As seen on the upper leftmost illustration, similar bends on the intermediate part IP are present in each side, i.e. the generally helical structure has bends with an angular interval of 180°. This allows the intermediate part IP to provide a flexible interconnection between the first and second parts P1, P2, and at the same time it facilitates mounting since the first and second parts P1, P2 only have a small limited angular interval, e.g. 5-10°, of free movement, whereas relative rotation is effectively blocked outside this limited angular interval. Alternatively, the bends B1, B2, B3 are shaped to provide a blocking mechanism to block only relative rotation of the first and second parts P1, P2 in one direction, while providing only a limited resistance against relative rotation of the first and second parts P1, P2 in the opposite direction.

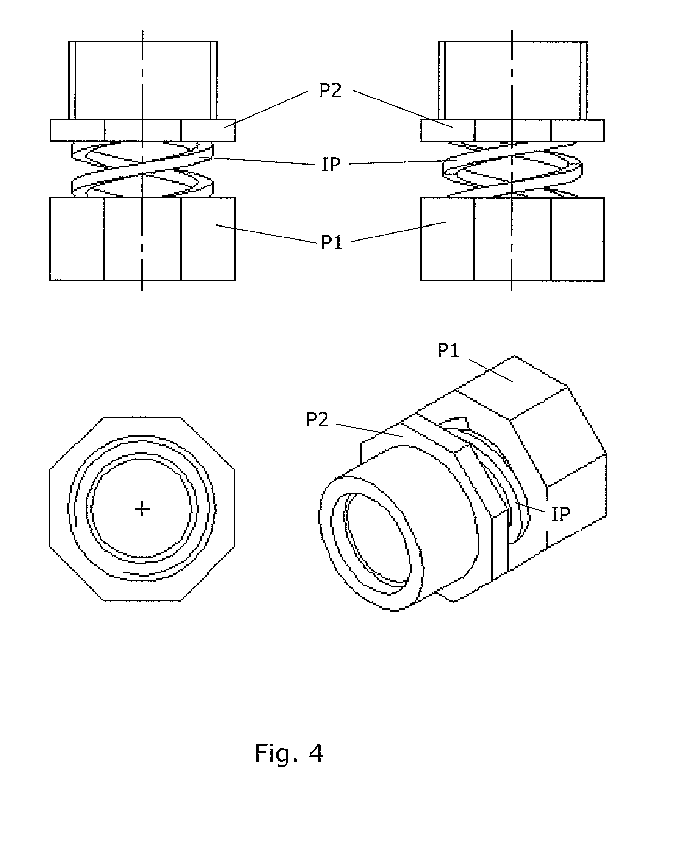

Fig. 4 illustrates different views of an embodiment with the intermediate part IP being an open structure in the form of two helically shaped elements encircling the through-going opening for fluid transport, each of these two elements being connected in one end to the first part P1 and connected to the second part in their opposite ends. Each element extends over one full 360° turn, and they are attached to the first and second parts P1, P2 with an angular displacement of 180°. Such intermediate part IP also provides a lateral and longitudinal flexibility while still such structure protects towards large angular, lateral and longitudinal displacements between the first and second parts P1, P2. However, the embodiment in Fig. 4 does not provide an angular blocking mechanism as in the embodiment of Fig. 3, rather it provides a gradual angular resistance.

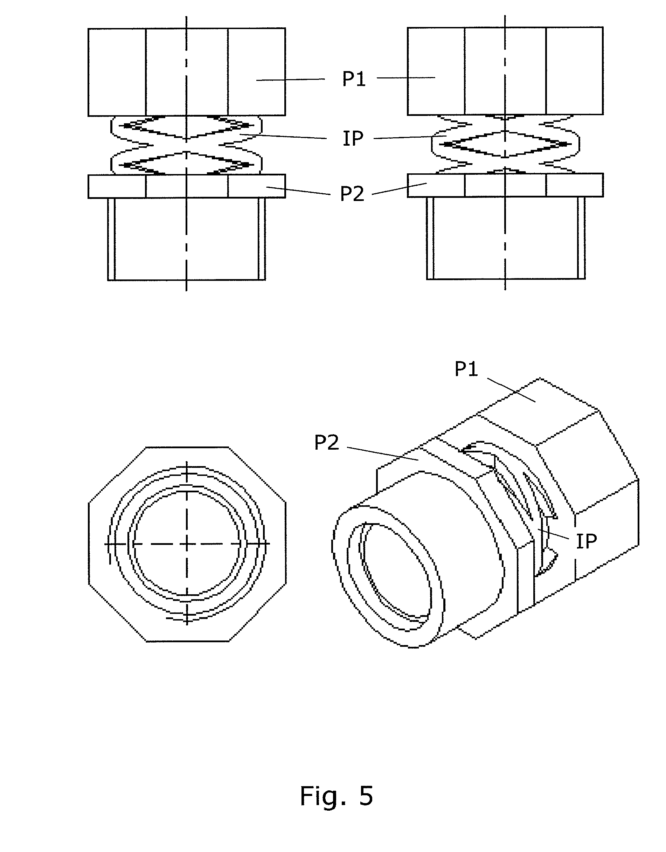

Fig. 5 illustrates different views of yet another embodiment with an intermediate part IP being an open structure. In this embodiment the open structure is a gridlike structure interconnecting the first and second parts P1, P2. Again a flexibility to relative movements of the first and second parts P1, P2 is provided with a limiting effect on large angular, lateral and longitudinal displacements.

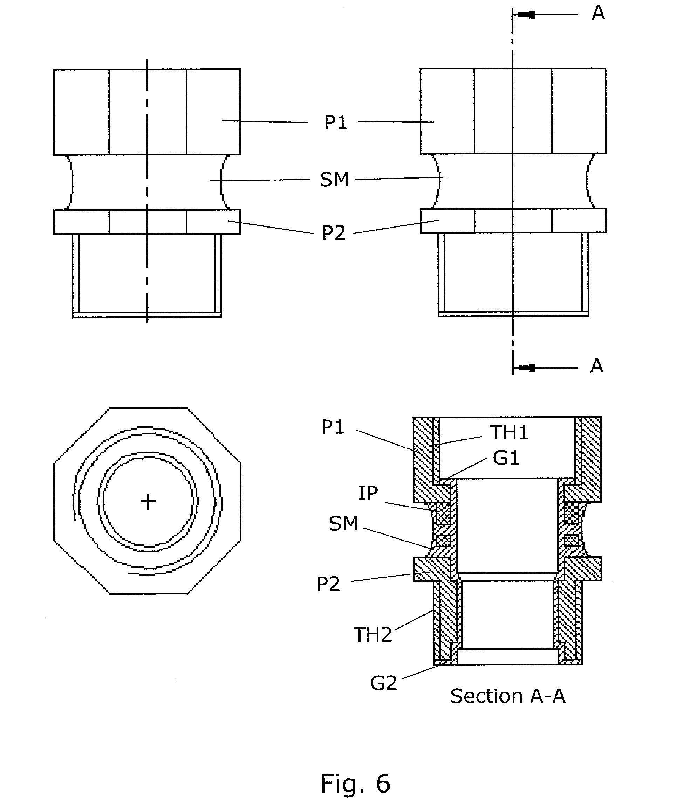

Fig. 6 illustrates different views of a complete flexible coupling device in the form of the monolithic structure P1, IP, P2 illustrated in Fig. 3 completely assembled with the sealing material SM. The intermediate structure IP is not visible in the outside views of Fig. 6, since it is embedded in the sealing material SM filling the gap between the first and second parts P1, P2. However, in section A-A the intermediate structure IP is visible as well as the inner thread TH1 on the first part P1 and the outer thread TH2 on the second part P2 are visible. Further, section A-A illustrates the inner gasket G1 on the first part P1 and the outer gasket G2 on the second part P2, wherein both of these gaskets G1, G2 are seen to be formed by the sealing material SM which is through-going and serves to seal all inner parts of the monolithic structure P1, IP, P2 from contact with the fluid.

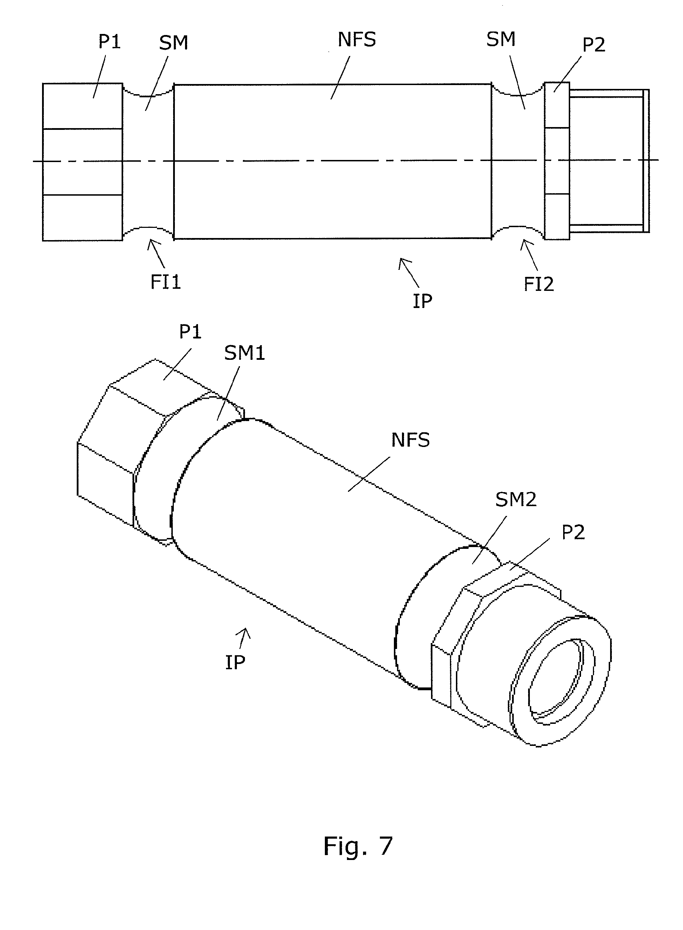

Fig. 7 illustrates a complete flexible coupling device embodiment with a monolithic structure including first and second parts P1, P2 formed as in the earlier described embodiments. The embodiment in Fig. 7 deviates from the earlier described embodiments with respect to the monolithic structure which has an intermediate part IP including (not visible) first and second flexible interconnections FI1, FI2 connected via at least one non-flexible section NFS, here illustrated in the form of a tubular-shaped extension piece. Such section NFS can easily be formed with a desired length such that a total length of the flexible coupling device reaches a desired value. The non-flexible section NFS is interconnected between first and second flexible structures FS1, FS2 embedded in the through-going sealing material SM. The flexible structures FS1, FS2 serves to provide a flexible interconnection between the first part P1 and a first end of the non-flexible section NFS, and between the second part P2 and a second end of the non-flexible section NFS, respectively. The flexible structures FS1, FS2 may be different or identical, and it is to be understood that the flexible structures FS1, FS2 may be formed such as illustrated and described for the intermediate parts IP of Figs. 3-6.

In the embodiment of Fig. 7 the non-flexible section NFS is illustrated as a straight piece of pipe, however it is to be understood that the non-flexible section NFS may as well be a non-flexible section providing a bending in one or more directions, so as to provide a flexible interconnection of pipes that extend in different directions.

To reach a desired total length of the flexible coupling device, the embodiments illustrated in Figs. 1-6 may be used, wherein the length of the first part P1, the second part P2 and the intermediate part IP is varied to fit the desired total length. For large total lengths, the embodiment of Fig. 7 is preferable, since it provides flexibility in both ends and thus avoids use of one long rigid end part P1, P2 which will be vulnerable to permanent damages if used for interconnection of pipes with a significant lateral displacement.

To sum up, the invention provides a flexible coupling device for providing a flexible or elastic fluid transport between two pipes. The device includes a monolithic structure with an opening arranged for fluid transport. The monolithic structure is formed by a first part for connection to a first orifice of a pipe, a second part for connection to a second orifice of another pipe, and an intermediate part formed so as to provide a flexible interconnection between the first and second parts. The first and second parts are preferably threaded and may have a nut shape in order to allow engagement with a tool for mounting. A sealing material is arranged to seal an inner part of the monolithic structure from contact with the fluid upon fluid transport through the opening in the monolithic structure. The monolithic structure and the sealing material are formed by different polymeric materials, preferably with the sealing material being of a significantly softer polymeric material than the polymeric material used to form the monolithic structure. The intermediate and flexible part may be formed by a helical structure, e.g. including a blocking mechanism arranged to block relative rotation of the first and second parts. The flexible coupling device is suited for flexibly connecting a flow meter with a polymeric housing to piping in order to protect the polymeric housing from damage due to lateral or bending forces.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A flexible coupling device arranged to provide a flexible fluid transport between two orifices, wherein the coupling device includes
- a monolithic structure having an opening arranged for transport of a fluid, the monolithic structure including
- a first part (P1) arranged for connection to a first orifice,
- a second part (P2) arranged for connection to a second orifice,
- an intermediate part (IP) formed so as to provide a flexible interconnection between the first and second parts (P1, P2), and
- a sealing material (SM) arranged to seal an inner part of the monolithic structure from contact with the fluid upon transport through the opening in the monolithic structure,
wherein the monolithic structure is formed by a first polymeric material, and wherein the sealing material (SM) is formed by a second polymeric material different from the first polymeric material.

2. Flexible coupling device according to claim 1, wherein the first polymeric material is harder than the second polymeric material, such as the first polymeric material exhibiting a value between 35 and 100 on the shore D scale, and the second polymeric material exhibiting a value between 10 and 90 on the shore A scale.

3. Flexible coupling device according to claim 1 or 2, wherein the sealing material (SM) is integrated with the first and second parts (P1, P2) and the intermediate part (IP).

4. Flexible coupling device according to any of the preceding claims, wherein the sealing material (SM) is through-going from the first part (P1) to the second part (P2), and wherein the sealing material (SM) provides a first gasket surface (G1) at the first part (P1), and a second gasket surface (G2) at the second part (P2).

5. Flexible coupling device according to any of the preceding claims, wherein the intermediate part (IP) includes an open structure, and wherein the sealing material (SM) serves to seal the opening provided by the open structure so as to provide a sealed opening through the intermediate part (IP).

6. Flexible coupling device according to claim 5, wherein the open structure includes one or more helically shaped elements connecting the first and second parts (P1, P2).

7. Flexible coupling device according to claim 5 or 6, wherein the open structure of the intermediate part (IP) is embedded in the sealing material (SM).

8. Flexible coupling device according to any of the preceding claims, wherein the intermediate part (IP) has a structure arranged to limit relative movements of the first and second parts (P1, P2).

9. Flexible coupling device according to claim 8, wherein the intermediate part (IP) includes a helical structure serving to limit relative movement of the first and second parts (P1, P2) in at least one direction, such as in both directions.

10. Flexible coupling device according to claim 8 or 9, wherein the intermediate part (IP) is arranged to limit opposite rotation of the first and second parts (P1, P2) outside a limited angular interval.

11. Flexible coupling device according to claim 10, wherein the intermediate part (IP) includes a block mechanism (B1, B2, B3) arranged to block opposite rotation of the first and second part (P1, P2), in at least one direction, when exceeding the limited angular interval.

12. Flexible coupling device according to any of the preceding claims, wherein at least one of the first and second parts (P1, P2) includes a thread (TH1, TH2) arranged for connection to an associated counterpart, such as the first part (P1) including an inward threaded part (TH1) and the second part (P2) including an outward threaded part (TH2).

13. Flexible coupling device according to any of the preceding claims, wherein the intermediate part (IP) has at least a portion of its extension which exhibits a cross sectional area being smaller than a cross sectional areal of any of the first and second parts (P1, P2).

14. Flexible coupling device according to any of the preceding claims, wherein the first and second parts (P1, P2) include parts arranged for engagement with an associated tool for attaching the flexible coupling device to an associated piping, such as the first and second parts (P1, P2) having respective nut shaped portions.

15. Flexible coupling device according to any of the preceding claims, wherein the intermediate part (IP) includes a plurality of flexible interconnections (FI1, FI2) connected via at least one non-flexible section (NFS), such as a tubular extension.

16. Flexible coupling device according to any of the preceding claims, wherein the first polymeric materials is one of: fibre reinforced -PPS, -PA12, -PA6, -PPO, -PES or -PEEK, and wherein the second polymeric materials is one of: Silicone, NR, SBR, IIR, EPDM, templastic -TPE or -TPU.

17. A set of flexible coupling devices including a plurality of flexible coupling devices according to any of claims 1-16, wherein the plurality of coupling devices have different total lengths, such as a plurality of identical flexible coupling devices differing only with respect to a length of the monolithic structure.

18. Use of a flexible coupling device according to any of claims 1-16 for connecting an ultrasonic flow meter, such as an ultrasonic flow meter with a polymeric housing, to a pipe.

19. Method of manufacturing a flexible coupling device according to any of claims 1-16, the method including casting the monolithic structure (P1, P2, IP) of the first polymeric material in a first mould, and casting the sealing material (SM) of the second polymeric material together with the monolithic structure using a second mould.
